# EUROPEAN PATENT APPLICATION

(11) **EP 2 492 821 A1**
(43) Date of publication of application: **29.08.2012**
(21) Application number: 10788711.9
(22) Date of filing: 22.04.2010
(51) Int. Cl.: G06F 13/10

(54) **METHOD AND DEVICE FOR UPDATING DATA CARD**

(30) Priority: 21.10.2009 CN 200910206606
(71) Applicant: ZTE Corporation, Shenzhen, Guangdong 518057 (CN)
(72) Inventor: DONG, Yong, Shenzhen Guangdong 518057 (CN)
(74) Representative: Fassio, Valeria
(86) International application number: PCT/CN2010/072059
(87) International publication number: WO 2010/145315

(57) **Abstract**

Disclosed are a method and apparatus for updating a data card. The method comprises: updating by way of downloading from an online update website the operating system of a user terminal and an operating system side device driver of a data card of the user terminal; downloading from the online update website a coordinated installer program suitable for running in the updated operating system; and updating by way of running the coordinated installer program in the updated operating system a board side device driver of the data card. The present method can enable the board side device driver of the data card to interact with the operating system side device driver, thus the data card can be used normally.

## Description

### Field of the Invention

The present invention relates to the communication field, and more particularly to a method and apparatus for updating a data card.

### Background of the Invention

A user terminal installed with a data card is usually installed with an operating system, and it is needed to install a driver for the data card. The driver is divided into an operating system side device driver running under the operating system and a board side device driver running at the data card side. By way of the cooperation between the operating system side device driver and board side device driver, the data card can work normally.

With the development of operating systems, the manufactures of operating systems start to support the latest version device drivers provided by the device manufactures, and then the operating system manufactures provide the above latest version device drivers together with the latest version operating systems onto an online update website for the user to update.

Currently, in the method of updating the board side device driver of the data card, the version information about the current board side device driver is acquired by calling a relevant interface function using an upper layer application at the operating system side and the user determines whether the board side device driver needs to be updated. If it is confirmed that the board side device driver needs to be updated, then the upper layer application updates the board side device driver by calling a relevant interface function.

With the user updating with the latest version operating system, the operating system side driver of the data card is also updated to the drive of the latest version together with the operating system. However, after it has been updated to the latest version operating system, maybe the upper layer applications of the original operating system is not able to run in the new operating system, thus causing that the upper layer applications of the original operating system cannot be used to call the relevant interface function to update the board side device driver, finally resulting in that the operating system side device driver of the data card cannot coordinately work with the board side device driver of the data card, and finally causing that the data card cannot be used any more.

After the above operating system is updated, the data card has been unable to be used normally. Specifically, the user of the data card cannot update the board side device driver using the upper layer application after updating his operating system to the latest version using the online update website. Therefore, the board side device driver of the data card cannot be updated. This problem exists in various data card device manufactures, and currently there is still no feasible solution.

### Summary of the Invention

The present invention is proposed aiming at the problem that the board side device driver of the data card cannot interact with the operating system side device driver of the data card due to the updating of the operating system which causes that the data card cannot be used normally. For this end, the main object of the present invention is to provide a method and apparatus for updating a data card so as to solve the above problem.

In order to achieve the above object, a method for updating a data card is provided according to one aspect of the present invention, comprising: by way of downloading from an online update website, updating the operating system of a user terminal and an operating system side device driver of a data card of the user terminal; downloading from the online update website a coordinated installer program suitable for running in the updated operating system; and by way of running the coordinated installer program in the updated operating system, updating a board side device driver of the data card.

Furthermore, in the above method, by way of running the coordinated installer program in the updated operating system, updating a board side device driver of the data card comprises performing the following steps when running the coordinated installer program: determining whether the current board side device driver of the data card needs to be updated; if it needs to be updated, then downloading into the user terminal the latest version board side device driver corresponding to the data card from the online update website; and downloading into the data card the latest version board side device driver which is already downloaded into the user terminal.

Furthermore, in the above method, the following steps is performed when running the coordinated installer program: if it is determined that the current board side device driver does not need to be updated, then ending the updating of the board side device driver of the data card.

Furthermore, in the above method, determining whether the current board side device driver of the data card needs to be updated comprises: detecting information about the data card; and determining whether the current board side device driver of the data card needs to be updated according to the information about the data card and a pre-established drive update list.

Furthermore, in the above method, the information about the data card comprises hardware information about the data card and/or version information about the current board side device driver of the data card.

An apparatus for updating a data card is provided according to another aspect of the present invention, comprising: a system update module adapted for, by way of downloading from an online update website, updating the operating system of a user terminal and an operating system side device driver of a data card of the user terminal; a coordinated downloading module adapted for downloading from the online update website a coordinated installer program suitable for running in the updated operating system; and an update module adapted for, by way of running the coordinated installer program in the updated operating system, updating a board side device driver of the data card.

Furthermore, in the above apparatus, the board side update module comprises: a judging module adapted for determining whether the current board side device driver of the data card needs to be updated; a downloading module adapted for, if it needs to be updated, then downloading into the user terminal the latest version board side device driver corresponding to the data card from the online update website; and a replacement module adapted for downloading into the data card the latest version board side device driver which is already downloaded into the user terminal.

Furthermore, in the above apparatus, the board side update module further comprises: a cancellation module adapted for, if it is determined that the current board side device driver does not need to be updated, then ending the updating of the board side device driver of the data card.

Furthermore, in the above apparatus, the judging module comprises: a detection module adapted for detecting information about the data card; and a determination module adapted for determining whether the current board side device driver of the data card needs to be updated according to the information about the data card and a pre-established drive update list.

Furthermore, in the above apparatus, the information about the data card comprises hardware information about the data card and/or version information about the current board side device driver of the data card.

By way of the present invention, during the updating of the operating system side device driver, the board side device driver of the data card is updated by running a coordinated installer program which is suitable for running under the new operating system, which solves the problem that the board side device driver of the data card cannot interact with the operating system side device driver of the data card due to the updating of the operating system which causes that the data card cannot be used normally.

### Brief Description of the Drawings

The drawings illustrated here provide a further understanding of the present invention and form a part of the present application. The exemplary embodiments of the present invention and the description thereof are used to explain the present invention without unduly limiting the scope of the present invention. In the drawings:
Fig. 1 is a flowchart of a method for updating a data card online according to the embodiments of the present invention;
Fig. 2 is a schematic diagram of the data card of updating various modules online according to the embodiments of the present invention;
Fig. 3 is a flowchart of updating the board side device driver of the data card online according to the preferred embodiments of the present invention;
Fig. 4 is a flowchart of a user manually updating the board side device driver of the data card according to the preferred embodiments of the present invention; and

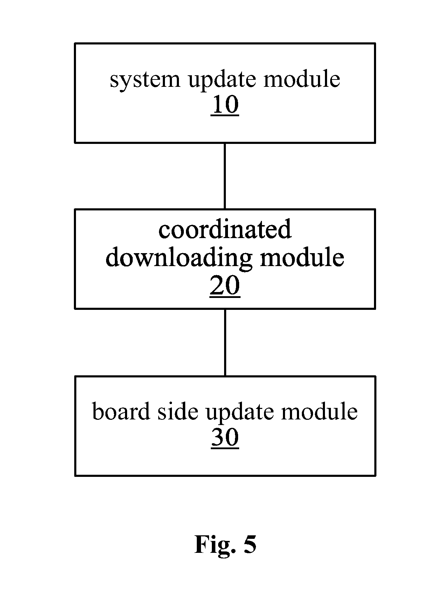

Fig. 5 is a structural block diagram of an apparatus for updating a data card according to the embodiments of the present invention.

### Detailed Description of Embodiments

It is needed to note that the embodiments of the present application and the features in the embodiments can be combined with each other if there is no conflict. The present invention will be described hereinafter in detail with reference to the drawings and in conjunction with embodiments.

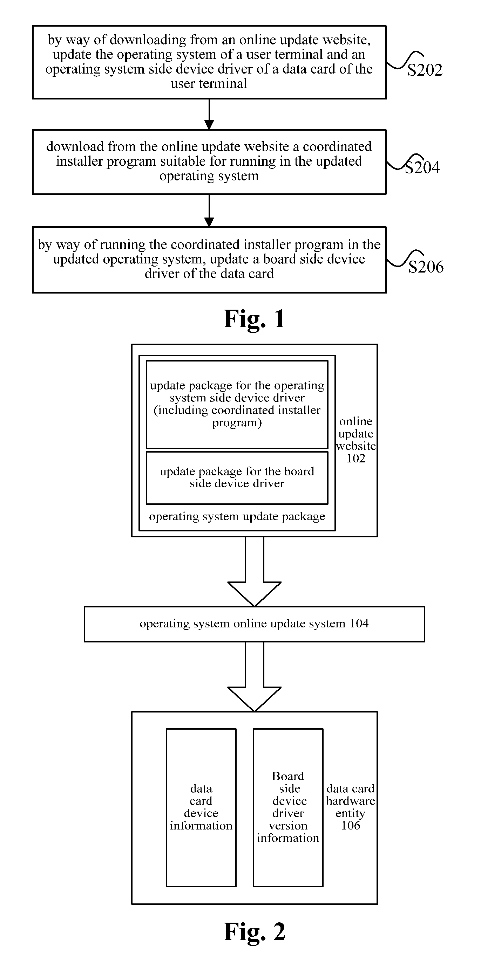

Fig. 1 is a flowchart of a method for updating a data card online according to the embodiments of the present invention, comprising:
Step S10: by way of downloading from an online update website, updating the operating system of a user terminal and an operating system side device driver of a data card of the user terminal;
Step S20: downloading from the online update website a coordinated installer program suitable for running in the updated operating system; and
Step S30: by way of running the coordinated installer program in the updated operating system, updating a board side device driver of the data card.

In relevant art, the board side device driver is updated using the upper layer application of the original operating system to call the relevant interface function. In this embodiment, the board side device driver is updated by running a coordinated installer program which is suitable for running in the updated operating system, thus solving the problem that the board side device driver of the data card cannot interact with the operating system side device driver of the data card due to the updating of the operating system, causing that the data card cannot be used normally.

Preferably, in the above method, step S30 comprises, when running the coordinated installer program, performing the following steps:
determining whether the current board side device driver of the data card needs to be updated;
if it needs to be updated, then downloading into the user terminal the latest version board side device driver corresponding to the data card from the online update website; and
downloading into the data card the latest version board side device driver which has been already downloaded into the user terminal.

In relevant art, the upper layer application calls the relevant interface function to update the board side device driver. In this embodiment, the relevant interface function will no longer be called but the coordinated installer program itself will run to download the update program and download the update program into the data card.

Preferably, in the above method, when running the coordinated installer program, the following step is performed: if it is determined that the current board side device driver does not need to be updated, then the updating of the board side device driver of the data card is ended.

This embodiment can avoid the meaningless downloading of the update, thereby saving resources.

Preferably, in the above method, determining whether the current board side device driver of the data card needs to be updated comprises: detecting information about the data card; and determining whether the current board side device driver needs to be updated according to the information about the data card and a pre-established drive update list. This embodiment can be easily implemented.

Preferably, in the above method, the information about the data card comprises hardware information of the data card and/or version information of the current board side device driver of the data card. This is common data card information, and with the information it can be very easy to determine the update state of the board side driver of the data card.

Fig. 2 is a schematic diagram of the data card online updating system according to the embodiments of the present invention, including an online update website **102**, an operating system online update system **104** and a data card hardware entity **106**. They will be described in detail hereinafter.

The online update website **102** mainly provides an operating system update package, wherein the operating system update package mainly includes information which is needed by the updating of all operating systems, and which in particular includes an update package for the operating system side device driver of the data card and an update package for the board side device driver of the data card.

The update package for the operating system side device driver of the data card mainly includes an operating system side device driver of the data card and a coordinated installer program which cooperates with the execution of the device driver. The main function of the operating system side device driver of the data card is to update an operating system side device driver corresponding to the data card and enable the data card to smoothly execute in the latest operating system. The main function of the coordinated installer program of the driver is to cooperates during the upgrade installation with the operating system side device driver of the data card to do some supplement processing, which in particular can be to detect the board side device driver of the data card and update the board side device driver of the data card when necessary.

The update package for the board side device driver of the data card is mainly downloaded by the network interface module, that the coordinated installer program carries by itself, from the online update website when the coordinated installer program determines that the data card has to update the corresponding board side device driver of the data card, and the drive update module that the coordinated installer program carries by itself is responsible for updating the board side device driver of the data card.

The operating system online update system **104** is mainly for updating the operating system. Both the updating of the whole operating system and the updating of the device driver are initiated by the operating system online update system.

The information contained in the data card hardware entity **106** mainly includes data card hardware device information and data card board side device driver information. In this case, the data card hardware device information represents data card hardware entity information, and the data card board side device driver information mainly includes the data card board side device driver. The embodiments of the present invention mainly focus in that the combination of the version information of board side device driver of the data card and the above hardware device information of the data card can be used to determine whether the current data card board side device driver needs to be updated.

Hereinafter, the embodiments of the present invention will be described in conjunction with various module structures of the data card online update system as shown in Fig. 1.
1. Updating the operating system using an online update website.
2. During the updating of the operating system, it will enter the process of updating the operating system side device driver of the data card.
3. During the updating of an operating system side device driver corresponding to the data card, a pre-registered coordinated installer program corresponding to the operating system side device driver will be called.
4. During the execution of the coordinated installer program, the currently used data card information and the version information of the board side device driver of the data card will be acquired using a board side device driver corresponding to the data card.
5. Whether the current board side device driver version needs to be upgraded can be determined via a board side device driver version update information list pre-stored in the coordinated installer program using the acquired data card information and corresponding board side device driver version information.
6. If the determination result is that the current board side device driver version does not need to be upgraded, then the drive coordinated installer program is exited and then the updating of other components of the operating system is executed, otherwise, continuing to execute the subsequent steps.
7. Acquiring a currently available installation package for the board side device driver of the data card from the online update website using a network component.
8. Achieving the updating of the board side device driver by calling the board side drive update function of the coordinated installer program.
9. Continuing to execute the updating of other components of the operating system.

With the above items 1-9, in conjunction of various module structures of the data card online update system in Fig. 1, the embodiments of the present invention are described. Two preferred embodiments of the present invention will be further described hereinafter.

### Preferred Embodiment 1

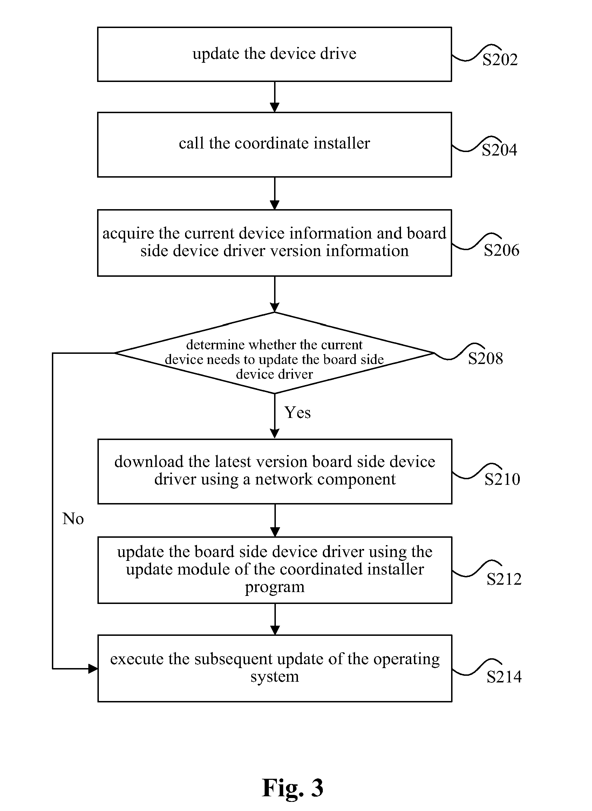

Fig. 3 is a flowchart of updating the board side device driver of the data card online according to the preferred embodiments of the present invention. The updating of the data card board side device driver is achieved via the automatic updating of the operating system, and includes the following steps.

Step S202: during the updating of the operating system, the process of updating the operating system side device driver of the data card starts.

Step S204: during the updating of the operating system side device driver corresponding to the data card, the process of starting to execute the coordinated installer program is enabled.

Step S206: during the execution of the coordinated installer program, the current device information of the data card and the version information of the board side device driver are acquired.

Step S208: determining whether the current board side device driver needs to be updated using the acquired current hardware information of the data card and the version information of the board side device driver, through a drive update list pre-stored in the coordinated installer program. If the determination result is no, then the updating of the operating system side device driver of the data card is completed and it proceeds to step S214.

Step S210: if the determination result is yes, then the latest version board side device driver corresponding to this data card is downloaded from the online update website into the user terminal using the network interface module that the coordinated installer program carries itself.

Step S212: downloading into the data card the latest version board side device driver which has been already downloaded into the user terminal using the drive update module in the coordinated installer program.

Step S214: continuing to execute the subsequent updating of the operating system after the version upgrading of the device drive of the data card is completed.

### Preferred Embodiment 2

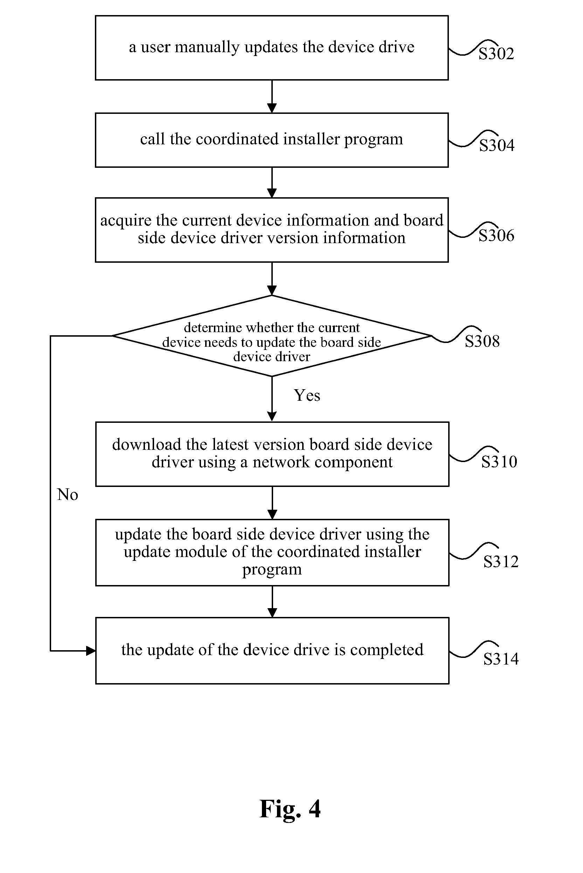

Fig. 4 is a flowchart of a user manually updating the board side device driver of the data card according to the preferred embodiments of the present invention. The updating of the data card board side device driver is achieved via the automatic updating of the operating system side device driver of the data card, and includes the following steps.

Step S302: the user starts to manually update the operating system side device driver.

Step S304: during the updating of the operating system side device driver corresponding to the data card, the process of starting to execute the coordinated installer program is enabled.

Step S306: during the execution of the coordinated installer program, acquiring the current device information of the data card and the version information of the board side device driver.

Step S308: determining whether the current board side device driver needs to be updated using the acquired current hardware information of the data card and the version information of the board side device driver, through a drive update list pre-stored in the coordinated installer program. If the determination result is no, the operating system side device driver of the data card is completed and it proceeds to step S314.

Step S310: if the determination result is yes, then the latest version board side device driver corresponding to this data card is downloaded from the online update website into the user terminal by the coordinated installer program calling a network component of the data card.

Step S312: downloading into the data card the latest version board side device driver which has been already downloaded into the user terminal, using the board side device drive update module of data card in the coordinated installer program.

Step S314: after the version upgrading of the data card board side device drive is completed, the whole process of the user of manually updating the operating system side device driver of the data card is completed.

It is need to note that the steps shown in the flowchart of the drawing can be performed in a computer system such as a set of computer executable instructions, and although the logical order is shown in the flowchart, the steps shown or described can be performed in an order different from the order here in some cases.

Fig. 4 is a structural block diagram of an apparatus for updating a data card online according to the embodiments of the present invention, comprising:
a system update module **10** adapted for, by way of downloading from an online update website, updating the operating system of a user terminal and an operating system side device driver of a data card of the user terminal;
a coordinated downloading module **20** adapted for downloading from the online update website a coordinated installer program suitable for running in the updated operating system; and
a board side update module **30** adapted for, by way of running the coordinated installer program in the updated operating system, updating a board side device driver of the data card.

In relevant art, the board side device driver is updated using the upper layer application of the original operating system to call the relevant interface function. However, in this embodiment, the board side device driver is updated by running a coordinated installer program which is suitable for running in the updated operating system, thus solving the problem that the board side device driver of the data cannot interact with the operating system side device driver due to the updating of the operating system, causing that the data card cannot be used normally.

Preferably, in the above apparatus, the board side update module comprises: a judging module adapted for determining whether the current board side device driver of the data card needs to be updated; a downloading module adapted for downloading if the update is needed, into the user terminal the latest version board side device driver corresponding to the data card from the online update website; and a replacement module adapted for downloading into the data card the latest version board side device driver which has been already downloaded into the user terminal.

In relevant art, the upper layer application calls the relevant interface function to update the board side device driver. In this embodiment, the relevant interface function will no longer be called but the coordinated installer program itself will run to download the update program and download it into the data card.

Preferably, in the above apparatus, the board side update module also comprises: a cancellation module adapted for ending the updating of the board side device driver of the data card if it is determined that the current board side device driver does not need to be updated.

This embodiment can avoid the meaningless downloading of the update program, thereby saving resources.

Preferably, in the above apparatus, the judging module comprises: a detection module adapted for detecting information about the data card; and a determination module adapted for determining whether the current board side device driver needs to be updated according to the information about the data card and a pre-established drive update list. This embodiment can be easily implemented.

Preferably, in the above apparatus, the information about the data card comprises hardware information of the data card and/or version information of the current board side device driver of the data card. This is common data card information, and with the information it can be very easy to determine the update state of the board side driver of the data card.

It is needed to note that the data card update apparatuses described in the apparatus embodiments correspond to the above method embodiments, and its specific implementation has been described in detail in the method embodiments, which will not be described here redundantly.

In summary, a method and an apparatus for updating a data card are provided according to the above embodiments of the present invention. During the updating of the operating system side device driver, the board side device driver of the data card is updated by running a coordinated installer program which is suitable for running under the new operating system, so as to solve the problem that the board side device driver of the data card cannot interact with the operating system side device driver of the data card due to the updating of the operating system, causing that the data card cannot be used normally.

Obviously, those skilled in the art should understand that the above modules or steps of the present invention can be implemented using a general-purpose computing device, and they can be integrated on a single computing device or distributed over a network composed of multiple computing devices. Optionally, they can be implemented using computing device executable program codes. Thus, they can be stored in a storage device for being executed by the computing device, or they can be made into various integrated circuit modules respectively, or some modules or steps therein are made into a single integrated circuit module for implementation. In this way, the present invention is not limited to any particular combination of hardware and software.

Above description is only to illustrate the preferred embodiments but not to limit the present invention. Various alternations and changes to the present invention are apparent to those skilled in the art. The scope defined in the claims shall comprise any medication, equivalent substitution and improvement within the spirit and principle of the present invention.

## Claims

1. A method for updating a data card, **characterized by** comprising:
updating, by way of downloading from an online update website, an operating system of a user terminal and an operating system side device driver of the data card of the user terminal;
downloading from the online update website a coordinated installer program suitable for running in the updated operating system; and
updating, by way of running the coordinated installer program in the updated operating system, a board side device driver of the data card.

2. The method according to Claim 1, **characterized in that** the step of updating by way of running the coordinated installer program in the updated operating system the board side device driver of the data card comprises:
when running the coordinated installer program, performing the steps of:
determining whether the current board side device driver of the data card needs to be updated;
downloading, if it is needed to be updated, into the user terminal the latest version board side device driver corresponding to the data card from the online update website; and
downloading into the data card the latest version board side device driver which has been already downloaded into the user terminal.

3. The method according to Claim 1, **characterized in that** when running the coordinated installer program, the following step is further performed:
if it is determined that the current board side device driver does not need to be updated, then the updating of the board side device driver of the data card is ended.

4. The method according to Claim 2 or 3, **characterized in that** determining whether the current board side device driver of the data card needs to be updated comprises:
detecting information about the data card; and
determining whether the current board side device driver of the data card needs to be updated according to the information about the data card and a pre-established drive update list.

5. The method according to Claim 4, **characterized in that** the information about the data card comprises hardware information of the data card and/or version information of the current board side device driver of the data card.

6. An apparatus for updating a data card, **characterized by** comprising:
a system update module adapted for updating, by way of downloading from an online update website, the operating system of a user terminal and an operating system side device driver of the data card of the user terminal;
a coordinated downloading module adapted for downloading from the online update website a coordinated installer program suitable for running in the updated operating system; and
a board side update module adapted for updating, by way of running the coordinated installer program in the updated operating system, a board side device driver of the data card.

7. The apparatus according to Claim 6, **characterized in that** the board side update module comprises:
a judging module adapted for determining whether the current board side device driver of the data card needs to be updated;
a downloading module adapted for downloading, if it is needed to be updated, into the user terminal the latest version board side device driver corresponding to the data card from the online update website; and
a replacement module adapted for downloading into the data card the latest version board side device driver which has been already downloaded into the user terminal.

8. The apparatus according to Claim 6, **characterized in that** the board side update module further comprises:
a cancellation module adapted for ending, if it is determined that the current board side device driver does not need to be updated, the updating of the board side device driver of the data card.

9. The apparatus according to Claim 7 or 8, **characterized in that** the judging module comprises:
a detection module adapted for detecting information about the data card; and
a determination module adapted for determining whether the current board side device driver needs to be updated according to the information about the data card and a pre-established drive update list.

10. The apparatus according to Claim 9, **characterized in that** the information about the data card comprises hardware information of the data card and/or version information of the current board side device driver of the data card.
